# FASCICULE DE BREVET EUROPEEN

(11) **EP 2 292 314 B1**
(45) Date de publication et mention de la délivrance du brevet: **25.07.2012**
(21) Numéro de dépôt: 10171843.5
(22) Date de dépôt: 04.08.2010
(51) Int. Cl.: B01D 53/50, B01D 53/68, B01D 53/76, B01F 5/04, F23J 15/00, B01F 3/06, F23J 7/00, F23J 15/04

(54) **Buse de distribution de produits pulverulents dans une veine gazeuse et son procede de mise en oeuvre**
Düse zum Verteilen von pulverförmigen Produkten in einer Gasleitung und ihr Verfahren zur Anwendung& xA;
Nozzle for the distribution of powdery products in a gas conduct ind its process of application

(30) Priorité: 05.08.2009 FR 0955507
(43) Date de publication de la demande: 09.03.2011
(73) Titulaire: LAB SA, 69006 Lyon (FR)
(72) Inventeur: Siret, Bernard, 69200, VENISSIEUX (FR); Tabaries, Franck, 83190, OLLIOULES (FR)
(74) Mandataire: Grand, Guillaume

(56) Documents cités:
- WO-A-2004/035187
- US-A1- 2004 244 382

## Description

La présente invention concerne une buse de distribution de produits pulvérulents dans une veine gazeuse, ainsi qu'un procédé de mise en oeuvre de cette buse.

Les fumées issues des processus de combustion contiennent des polluants acides qu'il faut éliminer. Parmi ces polluants on trouve le dioxyde de soufre, l'acide chlorhydrique ainsi que de nombreux autres gaz acides. Différents procédés sont mis en oeuvre de façon industrielle, afin d'épurer les fumées avant de les rejeter à l'atmosphère.

Parmi ces procédés, on trouve les procédés secs dans lesquels on introduit dans la veine gazeuse des produits pulvérulents, lesquels réagissent avec les polluants acides et en particulier l'acide chlorhydrique et le dioxyde de soufre. Ceci permet de capter ces polluants à la surface des grains de solides, grains qui seront ensuite collectés sur un filtre à manches ou un électrofiltre.

Ces procédés sont bien connus et abondamment décrits dans la littérature et sont proposés à l'échelle industrielle. Cependant, pour être efficace, le réactif pulvérulent doit être correctement distribué au sein de la veine gazeuse. Les débits de fumées à traiter sont en général de plusieurs dizaines de milliers de mètres cube par heure, de sorte que la taille des gaines dans lesquelles il faut introduire le produit pulvérulent est en général très conséquente, à savoir nettement supérieure au mètre carré de section. Afin de répartir correctement le produit pulvérulent sur cette section, condition nécessaire pour avoir un rendement de captation poussé avec des consommations de réactif faible, deux solutions sont communément proposées.

On peut tout d'abord choisir d'injecter en plusieurs points de la section, en utilisant par exemple plusieurs buses de pulvérisation. Bien que cette solution soit techniquement utilisable, elle implique une instrumentation complexe, nécessaire pour équilibrer correctement le flux entre les différents points d'injection.

A titre d'alternative, on peut choisir d'injecter en un unique point, ou bien en un nombre très limité de points. Dans ce cas, il est nécessaire de faire appel à des mélangeurs statiques, ce qui entraîne des dépôts et donc des problèmes de maintenance. Cette solution entraîne en outre une perte de charge supplémentaire sensible, ce qui accroît par conséquent la consommation énergétique globale. Ainsi, WO-A-2004/035187, US-A-2004/244382 et GB-A-2 429 937 proposent d'utiliser des tubes à section circulaire, pourvus d'orifices répartis suivant la longueur des tubes. En particulier, la forme de réalisation montrée à la figure 50 de WO-A-2004/035187, qui peut être considérée comme l'état de la technique le plus proche de la présente invention, correspond à une buse de distr bution à même d'être montée dans une gaine de circulation de gaz et comprend in tube d'introduction cylindrique, prolongé par un tube de dispersion à section circulaire fermée, percé d'orifices.

Ceci étant précisé, l'invention vise à remédier aux différents inconvénients de l'art antérieur évoqués ci-dessus. Elle vise en particulier à proposer une buse de distribution pouvant être utilisée de façon efficace à elle seule, à savoir sans multiplier le nombre de buses. Elle vise également à proposer une telle buse, qui permet de distribuer les produits pulvérulents sur toute sa longueur. L'invention vise enfin à proposer une telle buse qui peut être utilisée en particulier dans des procédés d'épuration de fumée de combustion par la voie dite sèche, mais qui trouve également son application à tout type de dispersion de produits pulvérulents dans une veine gazeuse.

A cet effet, l'invention a pour objet une buse de distribution de produits pulvérulents dans une veine gazeuse, telle que définie à la revendication 1.

D'autres caractéristiques de cette buse sont spécifiées aux revendications dépendantes 2 à 6.

L'invention a également pour objet un système tel que défini à la revendication 7, ainsi qu'un procédé de mise en oeuvre d'une buse définie ci-dessus, tel que défini à la revendication 8.

L'invention va être décrite ci-après en référence aux dessins annexés, donnés uniquement à titre d'exemple non limitatif, dans lesquels :
- Les figures 1, 2 et 3 sont des vues respectivement de face, de dessous et de profil, illustrant une buse de distribution conforme à l'invention ;
- Les figures 4, 5 et 6 sont des vues respectivement de face, de dessus et de profil, illustrant la buse de distribution des figures 1 à 3, montée dans une gaine où circule une veine gazeuse; et
- Les figures 7 et 8 sont des vues respectivement de face et en coupe transversale à bien plus grande échelle, illustrant la distribution de produits pulvérulents mise en oeuvre grâce à la buse de l'invention.

La buse de distribution conforme à l'invention, illustrée sur les figures, est désignée dans son ensemble par la référence 1. Comme cela sera décrit plus en détail dans ce qui suit, cette buse comprend trois parties distinctes, à savoir une partie d'introduction 10, une partie de dispersion 20, ainsi qu'une partie de maintien 30, cette dernière étant optionnelle.

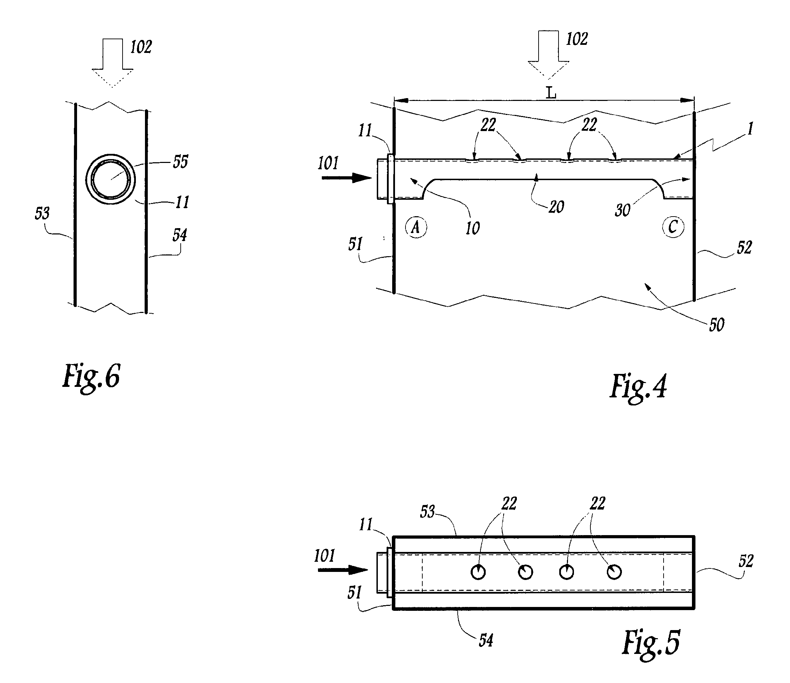

La buse 1 est destinée à être montée dans une gaine 50, plus particulièrement illustrée sur les figures 4 à 6. La gaine 50 présente des parois latérales 51 et 52, ainsi que des parois frontales 53 et 54. A titre de variante non illustrée, on peut utiliser une gaine de section cylindrique. Cette gaine permet la circulation d'une veine gazeuse, formée en l'occurrence par des fumées 102 circulant verticalement comme cela est matérialisé sur la figure 4. On note L la longueur utile de la buse, à savoir la longueur « pénétrante » de la buse à l'intérieur de la gaine. Cette longueur L correspond à la distance séparant les parois latérales opposées 51 et 52, entre lesquelles s'étend la buse. A titre non limitatif, l'épaisseur e de la paroi de cette buse peut être comprise entre 1 et 5 mm.

La figure 4 présente un cas typique de positionnement dans une gaine, dans laquelle les fumées circulent de manière verticale descendante. Ceci est la configuration préférée, mais l'invention est parfaitement utilisable d'autres configurations, et en particulier si les fumées circulent de manière horizontale dans la gaine. Le produit pulvérulent à disperser dans la gaine, porté par un fluide vecteur 101, est déjà mis en suspension dans ce fluide vecteur par tout moyen déjà connu en soi lorsqu'il est admis dans la buse, à une vitesse comprise entre 10 et 30 m/s, de préférence entre 15 et 25 m/s.

Cette admission a lieu dans la partie 10 cylindrique, laquelle se présente comme un simple tuyau, à savoir un élément tubulaire de section circulaire. Le débit de produits pulvérulents est imposé, tout comme le débit du gaz vecteur, de sorte qu'on choisit le diamètre de la partie 10 de la buse, afin de respecter la plage de vitesses ci-dessus.

Cette partie 10 est pourvue d'un moyen de fixation sur la paroi latérale 51 de la gaine 50. Dans l'exemple illustré, un tel moyen de fixation est par exemple une bride 11 coopérant avec les parois d'un orifice 55, ménagé dans la paroi précitée, orifice dans lequel est emmanchée la partie 10.

Selon une des caractéristiques de l'invention la longueur utile 11 de cette partie 10 est comprise entre 10 et 30 % de la longueur utile totale L. Comme dans le cas de l'ensemble de la buse, la longueur utile de la partie d'introduction est relative à la zone de cette portion s'étendant à l'intérieur de la gaine, à savoir à droite de la bride sur les figures 4 et 5.

Les fumées 102 dans lesquelles on veut disperser le solide réactif circulent dans la gaine, ici de manière verticale descendante, à une vitesse usuellement assez élevée, d'habitude comprise entre 10 et 20 mètres par seconde. En effet, des vitesses plus élevées conduisent à une perte de charge excessive tandis que des vitesses plus lentes conduisent à un dimensionnement qui n'est pas économique.

La partie cylindrique d'introduction 10 est prolongée par une partie de dispersion 20 en forme de tronçon de cylindre évidé. Cette partie de dispersion 20 se présente ainsi comme une portion de tube, dont la section forme un arc de cercle.

Dans l'exemple illustré, cette partie est hémi-cylindrique. Cependant, on peut prévoir qu'elle s'étend sur un secteur angulaire différent de 180°, en référence à un cylindre entier.

Ainsi, si on note h la hauteur de cette partie 20, cette hauteur est avantageusement comprise entre 40 et 60 % du diamètre extérieur D de la partie cylindrique 10, qui correspond au diamètre de la buse. Cette hauteur h correspond à la distance séparant chaque bord libre b1, b2 et le sommet de cette partie 20. La longueur I2 de cette partie 20 est avantageusement comprise entre 60 et 90 % de la longueur totale utile L. De plus, cette longueur I2 est avantageusement supérieure ou égale au double de la longueur I1 de la partie 10.

On note G la génératrice de la partie hemi-cylindrique 20, faisant face aux fumées. Dans l'exemple illustré, cette génératrice, dite principale, est par conséquent supérieure, à savoir qu'elle est placée sur le sommet de la partie 20. Des orifices 22 sont percés dans la partie 20, le long de la génératrice principale G. La section totale de ces orifices est comprise entre 2 et 15 % de la section efficace de la buse, définie comme le diamètre D multiplié par la longueur utile totale L de cette buse. De façon préférée, ces orifices présentent une forme circulaire, mais peuvent également en variante être constitués par une série de fentes, ou par une fente unique s'étendant le long de la génératrice principale.

En l'absence de la partie hemi-cylindrique de dispersion 20, le flux 101 portant le réactif pulvérulent serait très rapidement défléchi par les fumées et ne pourrait pas atteindre l'autre extrémité de la gaine, représentée sur la figure 4 comme la zone C. En revanche, si on prolonge de manière excessive la partie cylindrique 10, il n'y a alors pas de dispersion efficace dans la zone initiale A de la gaine, qu'on peut appeler zone amont en référence à l'introduction des produits pulvérulents.

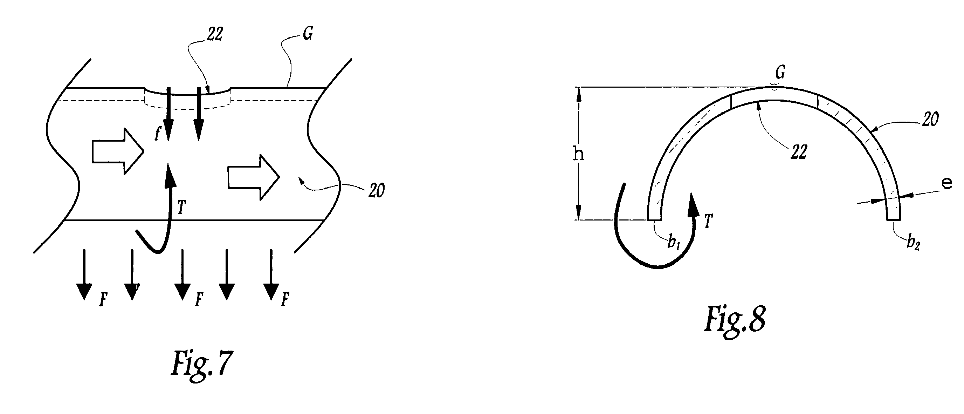

La partie hemi-cylindrique, qui agit comme un bouclier, protège le flux d'une déflexion prématurée et lui permet ainsi d'atteindre, en partie, la zone C. La distribution régulière du produit pulvérulent sur toute la longueur active de la buse est réalisée par deux phénomènes, illustrés aux figures 7 et 8.

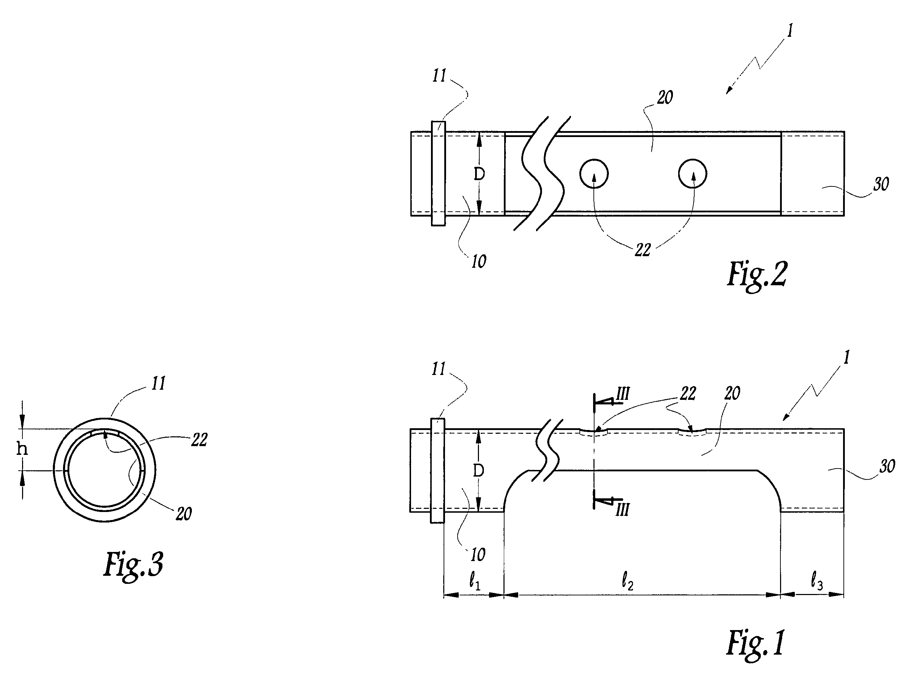

Tout d'abord, des turbulences représentées par T viennent lécher le flux introduit par l'intérieur et donc conduisent à extraire et à diffuser une partie de celui-ci dans la veine gazeuse. Cette extraction continue est symbolisée sur la figure 7 par les flèches F. Toutefois ce phénomène seul pourrait être insuffisant, en particulier pour les buses de dimensions importantes pour lesquelles l'effet bouclier de la partie hemi-cylindrique serait trop important. En l'absence d'ouvertures on se trouverait alors dans une situation où la plus grande partie du flux de produits pulvérulents atteindrait d'une manière très peu perturbée l'autre extrémité de la buse, vers la zone C de la figure 2. Selon l'invention, une partie des fumées passe à travers ces orifices (flèche f sur la figure 7) et interagit avec le flux portant les pulvérulents, ce qui contribue à extraire le flux vers l'ensemble de la gaine.

De façon optionnelle, la partie 20 de forme hemi-cylindrique est prolongée par une partie 30, dite de maintien. Celle-ci, qui peut présenter une forme cylindrique tubulaire analogue à celle de la partie 10, sert à fixer la buse à la paroi latérale 52. A cet effet, il est prévu des moyens de solidarisation non représentés, de type classique, entre l'extrémité libre de cette partie 30 et cette paroi 52. Comme on l'a vu ci-dessus, cette partie 30 est optionnelle, de sorte que la partie de dispersion 20 peut directement être solidarisée contre la paroi latérale 52. Lorsqu'elle est présente, la partie de maintien 30 possède une longueur I3 inférieure au tiers de la longueur totale L de la buse et, de préférence, inférieure au cinquième de cette longueur totale.

### EXEMPLE DE REALISATION

On utilise une buse de pulvérisation d'un diamètre D de 200 mm et d'une longueur utile L de 3 mètres. Les fumées sont des fumées de combustion et circulent de manière verticale descendante, à une vitesse de 15 m/s. La partie cylindrique d'introduction 10 de la buse, qui traverse la paroi 51, est raccordée à une bride permettant sa fixation du côté extérieur de la gaine. Du côté intérieur de la gaine, la partie cylindrique possède une longueur utile I1 de 300 mm. La partie hemi-cylindrique 20 s'étend sur la quasi totalité de la longueur restante, à savoir sur 2 500 mm. Elle est terminée par une partie cylindrique de maintien 30 dont la longueur I3 est de 200 mm.

Six orifices circulaires 22 de 80 mm de diamètre sont ménagés régulièrement le long de la génératrice supérieure G. La section de ces orifices est donc de 31 200 mm², soit environ 5% de la section efficace de la buse, correspondant au produit du diamètre D par la longueur totale utile I, soit 200 x 3 000, à savoir 600 000 mm². On introduit, en tant que produits pulvérulents, du bicarbonate de sodium, à une vitesse de 22 m/s. On note que, dans cette configuration, la distribution de produits pulvérulents s'opère de façon sensiblement homogène dans toute la section de la gaine.

## Revendications

1. Buse (1) de distribution de produits pulvérulents dans une veine gazeuse, laquelle buse (1) est adaptée pour être montée dans une gaine (50) de circulation de la veine gazeuse, en s'étendant longitudinalement à l'intérieur de la gaine sur une longueur utile (L) dite totale, et laquelle buse (1) comprend :
- une partie d'introduction tubulaire (10), de forme cylindrique, destinée à être fixée dars une première paroi (51) de la gaine (50) de manière à s'étendre longitudinalement à l'intérieur de la gaine sur une longueur utile (I₁) qui est comprise entre 10 et 30 % de la longueur utile totale (L), et
- une partie de dispersion (20), en forme de portion de cylindre évidé dont la section forme un arc de cercle, s'étendant dans le prolongement de la partie d'introduction cette partie de dispersion étant percée d'orifices (22) de passage des fumées, qui sont situés le long d'une génératrice dite principale (G) de la partie de dispersion, destinée à faire face à la veine gazeuse, et qui présentent une section totale comprise entre 2 et 15 % de la section efficace de la buse, correspondant à la longueur utile totale (L) multipliée par le diamètre extérieur (D) de la partie d'introduction (10), cette partie de dispersion (20) présentant une longueur (l₂) supérieure ou égale au double de la longueur utile (l₁) de la partie d'introduction (10).

2. Buse selon la revendication 1, **caractérisée en ce que** la partie de dispersion (20) est hémi-cylindrique.

3. Buse selon l'une des revendications 1 ou 2, **caractérisée en ce que** la partie de dispersion (20) présente une hauteur (h) comprise entre 40 et 60 % du diamètre extérieur (D) de la buse (1), cette hauteur (h) correspondant à la distance séparant la génératrice principale (G) et les bords libres (b1, b2) de la partie de dispersion.

4. Buse selon l'une des revendications précédentes, **caractérisée en ce que** la partie de dispersion (20) est terminée, à l'opposé de la partie d'introduction (10) par une partie de maintien (30) contre une paroi opposée (52) de la gaine (50), cette partie de maintien (30) présentant une longueur (l₃) inférieure au tiers de la longueur utile totale (L).

5. Buse selon l'une des revendications précédentes, **caractérisée en ce que** la partie de dispersion (20) présente une longueur (l₂) comprise entre 60 et 90 % de la lorgueur utile totale (L).

6. Buse selon l'une des revendications précédentes, **caractérisée en ce que** les orifices (22) de passage des fumées présentent une forme circulaire.

7. Sys:ème comprenant une gaine (50) de circulation d'une veine gazeuse et une buse (1) de distribution de produits pulvérulents, qui est conforme à l'une quelconque des revendications 1 à 6 et qui est montée dans la gaine.

8. Procédé de mise en oeuvre d'une buse conforme à l'une quelconque des revendications 1 à 6, dans lequel on fait circuler des produits pulvérulents, au sein d'un fluide porteur, à l'intérieur de la buse, à une vitesse comprise entre 10 et 30 m/s et, de préférence, entre 15 et 25 m/s, cette vitesse étant mesurée au niveau de la partie d'introduction (10).

## Claims

1. Nozzle (1) for distribution of powder products in a gas stream, which nozzle (1) is designed to be fitted in a sheath (50) for circulation of the gas stream, whilst extending longitudinally inside the sheath along a useful length (L), known as the total length, and which nozzle (1) comprises:
- a tubular introduction part (10) with a cylindrical form, which is designed to be secured in a first wall (51) of the sheath (50), such as to extend longitudinally inside the sheath over a useful length (l₁) which is between 10 and 30% of the total useful length (L); and
- a dispersion part (20) in the form of a portion of recessed cylinder, the cross-section of which forms an arc of a circle which extends in the extension of the introduction part, this dispersion part being perforated by apertures (22) for passage of the fumes, which apertures are situated along a so-called main generatrix (G) of the dispersion part which is designed to face the gas stream, and have a total cross-section of between 2 and 15% of the efficient cross-section of the nozzle, corresponding to the total useful length (L) multiplied by the outer diameter (D) of the introduction part (10), this dispersion part (20) having a length (l₂) which is twice the useful length (l₁) of the introduction part (10), or more.

2. Nozzle according to claim 1, **characterised in that** the dispersion part (20) is hemi-cylindrical.

3. Nozzle according to one of claims 1 or 2, **characterised in that** the dispersion part (20) has a height (h) of between 40 and 60% of the outer diameter (D) of the nozzle (1), this height (h) corresponding to the distance which separates the main generatrix (G) and the free edges (b1, b2) of the dispersion part.

4. Nozzle according to one of the preceding claims, **characterised in that** the dispersion part (20) ends, opposite the introduction part (10), in a part (30) for retention against an opposite wall (52) of the sheath (50), this retention part (30) having a length (l₃) which is less than a third of the total useful length (L).

5. Nozzle according to one of the preceding claims, **characterised in that** the dispersion part (20) has a length (l₂) of between 60 and 90% of the total useful length (L).

6. Nozzle according to one of the preceding claims, **characterised in that** the apertures (22) for passage of the fumes have a circular form.

7. System comprising a sheath (50) for circulation of a gas stream and a nozzle (1) for distribution of powder products, which is in conformity with any one of claims 1 to 6, and is fitted in the sheath.

8. Method for implementation of a nozzle according to any one of claims 1 to 6, wherein powder products are circulated in a carrier fluid inside the nozzle, at a speed of between 10 and 30 m/s, and preferably between 15 and 25 m/s, this speed being measured at the introduction part (10).

## Patentansprüche

1. Düse (1) zum Verteilen von pulverförmigen Stoffen in einen Gasstrom, wobei die Düse (1) geeignet ist, in einen Kanal (50) zum Zirkulieren des Gasstroms montiert zu werden, indem sie sich längs im Inneren des Kanals über eine nützliche Länge (L), genannt nützliche Gesamtlänge, erstreckt, und die Düse (1) umfasst:
- einen rohrförmigen Einführungsbereich (10) in zylindrischer Form, der dazu dient, in einer ersten Wand (51) des Kanals (50) befestigt zu werden, in einer Weise, dass er sich längs in das Innere des Kanals über eine nützliche Länge (l₁) erstreckt, die zwischen 10 und 30% der nützlichen Gesamtlänge (L) liegt,
- einen Verteilungsbereich (20) in Form eines Teils eines Hohlzylinders, dessen Querschnitt einen Kreisbogen bildet, der sich in der Verlängerung des Einführungsbereichs erstreckt, wobei dieser Verteilungsbereich mit Öffnungen (22) für den Durchgang von Rauchgasen durchbohrt ist, die entlang einer Mantellinie (G), genannt Hauptmantellinie, des Verteilungsbereichs liegen, die vorgesehen ist, dem Gasstrom zugewandt zu sein, wobei die Öffnungen einen Gesamtquerschnitt zwischen 2 und 15% des wirksamen Querschnitts der Düse aufweisen, entsprechend der nützlichen Gesamtlänge (L) multipliziert mit dem Außendurchmesser (D) des Einführungsbereichs (10), wobei dieser Verteilungsbereich (20) eine Länge (l₂) aufweist, die größer oder gleich dem Doppelten der nützlichen Länge (l₁) des Einführungsbereichs (10) ist.

2. Düse nach Anspruch 1, **dadurch gekennzeichnet, dass** der Verteilungsbereich (20) halbzylindrisch ist.

3. Düse nach einem der Ansprüche 1 oder 2, **dadurch gekennzeichnet, dass** der Verteilungsbereich (20) eine Höhe (h) aufweist, die zwischen 40 und 60% des Außendurchmessers (D) der Düse (1) ist, wobei diese Höhe (h) dem Abstand entspricht, der die Hauptmantellinie (G) von den freien Rändern (b1, b2) des Verteilungsbereichs trennt.

4. Düse nach einem der vorhergehenden Ansprüche, **dadurch gekennzeichnet, dass** der Verteilungsbereich (20) entgegengesetzt zum Einführungsbereich (10) durch einen Bereich (30) zum Halten gegen eine entgegengesetzte Wand (52) des Kanals (50) endet, wobei dieser Haltebereich (30) eine Länge (l₃) aufweist, die kleiner als ein Drittel der nützlichen Gesamtlänge (L) ist.

5. Düse nach einem der vorhergehenden Ansprüche, **dadurch gekennzeichnet, dass** der Verteilungsbereich (20) eine Länge (l₂) aufweist, die zwischen 60 und 90% der nützlichen Gesamtlänge (L) liegt.

6. Düse nach einem der vorhergehenden Ansprüche, **dadurch gekennzeichnet, dass** die Öffnungen (22) für den Durchgang der Rauchgase eine Kreisform aufweisen.

7. System mit einem Kanal (50) für die Zirkulation eines Gasstroms und einer Düse (1) für die Verteilung von pulverförmigen Stoffen entsprechend einem beliebigen der Ansprüche 1 bis 6 und die in den Kanal montiert ist.

8. Verfahren zur Realisierung einer Düse nach einem beliebigen der Ansprüche 1 bis 6, bei dem pulverförmige Stoffe mitten in einem Trägerfluid im Inneren einer Düse zirkuliert werden bei einer Geschwindigkeit, die zwischen 10 und 30 m/s und vorzugsweise zwischen 15 und 20 m/s liegt, wobei diese Geschwindigkeit am Einführungsbereich (10) gemessen wird.
